(19) Europäisches Patentamt
European Patent Office
Office européen des brevets

(11) **EP 3 595 460 B1**

(12) **EUROPEAN PATENT SPECIFICATION**

(45) Date of publication and mention
of the grant of the patent:
**08.05.2024 Bulletin 2024/19**

(21) Application number: **18711885.6**

(22) Date of filing: **13.03.2018**

(51) International Patent Classification (IPC):
**A23L 19/00** (2016.01)    **A23L 5/10** (2016.01)
**A23L 27/00** (2016.01)

(52) Cooperative Patent Classification (CPC):
**A23L 5/17; A23L 19/03; A23L 27/00**

(86) International application number:
**PCT/EP2018/056285**

(87) International publication number:
**WO 2018/167088 (20.09.2018 Gazette 2018/38)**

(54) **PROCESS FOR MAKING A PLANT COMPOSITION**

VERFAHREN ZUR HERSTELLUNG EINER PFLANZENZUSAMMENSETZUNG

PROCÉDÉ DE PRODUCTION D'UNE COMPOSITION VÉGÉTALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.03.2017 EP 17160643**

(43) Date of publication of application:
**22.01.2020 Bulletin 2020/04**

(73) Proprietor: **Société des Produits Nestlé S.A.
1800 Vevey (CH)**

(72) Inventors:
• **CARLI, Sophie**
**14000 Caen (FR)**
• **INQUIMBERT, Nelly**
**07340 Félines (FR)**
• **LEROUX, Marie**
**14000 Caen (FR)**

(74) Representative: **Seisson, Morgan Franck
Société des Produits Nestlé S.A.
Avenue Nestlé 55
1800 Vevey (CH)**

(56) References cited:
**EP-A1- 0 777 975        WO-A1-2006/056341
US-A1- 2010 055 242**

• "Griechischer Salat mit Gurken "sous-vide"" In: Tim Mälzer: "Greenbox", 2012, Random House GmbH, München, XP002769712, pages 48-49, page 49
• Anonymous: "I eat what tastes good!: Sous Vide Tomatoes Confit and Other Cute Christmas Food", , 27 January 2015 (2015-01-27), XP055368075, Retrieved from the Internet: URL:http://eatwhattastesgood.blogspot.de/2 015/01/sous-vide-tomatoes-confit-and-other .html [retrieved on 2017-04-27]
• David Seitz: "Obst Sous vide: Fruchtiges aus der Vakuum-Tüte", , 3 August 2014 (2014-08-03), XP055368083, Retrieved from the Internet: URL:http://schlaraffenwelt.de/obst-sous-vi de-fruchtiges-aus-der-vakuum-tuete/ [retrieved on 2017-04-27]
• DOUGLAS E. BALDWIN: "Sous vide cooking: A review", INTERNATIONAL JOURNAL OF GASTRONOMY AND FOOD SCIENCE, vol. 1, no. 1, 1 January 2012 (2012-01-01) , pages 15-30, XP055138049, ISSN: 1878-450X, DOI: 10.1016/j.ijgfs.2011.11.002
• MELANIE HOLZWARTH ET AL: "Evaluation of the effects of different freezing and thawing methods on color, polyphenol and ascorbic acid retention in strawberries (xDuch.)", FOOD RESEARCH INTERNATIONAL, ELSEVIER, AMSTERDAM, NL, vol. 48, no. 1, 12 April 2012 (2012-04-12) , pages 241-248, XP028401902, ISSN: 0963-9969, DOI: 10.1016/J.FOODRES.2012.04.004 [retrieved on 2012-04-20]

**Description**

**TECHNICAL FIELD**

The present invention relates generally to the field of vegetable material composition and processes for making such compositions. For example, the present invention relates to a process for making a vegetable composition comprising vegetable pieces and having improved flavour and colour.

**BACKGROUND OF THE INVENTION**

More and more, consumers desire more natural living and better eating. They wish to consume more consciously and look for simplicity, balance and well-being. Products should be healthy, without sacrificing pleasure. Consumers also favour "simple" products, in the sense that they prefer products which contain few and familiar ingredients. This runs against a possibility for food producers to use food additives to improve, for instance, texture, stability, flavour and aroma, of their products.

For instance, consumers like to experience the taste of a ripe fruit, its texture, fruit pieces size and overall mouthfeel in chilled dairy products, such as yogurts or fromage blanc with fruits. Consumers expect to perceive fruit intensity and freshness, as if the fruits were freshly picked from the garden. In culinary preparations, such as prepared dishes, consumers also appreciate when pieces of vegetables are savoury and have a natural flavour.

Freshness is related to something recently produced or picked and not frozen, dried or preserved in tin or cans. In terms of consumer perception, freshness is strongly related to naturalness. In addition, naturalness is also positively correlated to liking. Naturalness is a complex perception. Based on consumer research, it has been found that naturalness appears to be strongly associated to foods which are raw, not processed, without additives, i.e. without evidence of human modifications.

In parallel, food producers want to ensure that their products are safe for consumption and are shelf stable, for instance by removing undesired microbial contamination. Without an appropriate heat treatment, fruits such as grapes, peaches, raspberries or strawberries may spoil, which may affect the safety and organoleptic properties of the products.

Hence, traditionally, fruits and vegetables are heat-treated to prevent or slow down chemical changes and bacterial growth during storage. As a result, the fresh fruit or vegetable flavour is strongly reduced or lost.

EP 0777975 A1 discloses a process for the preparation of a vegetable juice or puree wherein fresh vegetable material is homogenised in water, under a neutral atmosphere, in order to liberate aroma precursors and part of the endogenous enzymes. Then the homogenised material is incubated at 0°C to 70°C for 5 minutes to 24 hour, and pasteurised or sterilised. Pasteurisation and sterilisation deactivate endogenous enzymes and ensure product quality and safety. The vegetable material does not undergo blanching before the process is performed. According to this document, the vegetable juice or puree thus prepared has a stronger raw aroma and its natural colour is better preserved than when using blanched vegetables.

This process requires homogenisation of the vegetable material, such as carrot, followed with pasteurisation. Homogenisation eases the heat treatment. However, this document does not provide a solution for the preparation of vegetable composition comprising pieces that consumers would be able to identify.

US 2010/0055242 A1 discloses a method for preparing a soft vegetable material which holds the shape of a particular ingredient. The vegetable material is frozen first and then thawed. The thawed vegetable material is then immersed in a dispersion containing a pectin- or a cellulose-decomposition enzyme, under reduced pressure. The vegetable material is thereafter subjected to a heat treatment to deactivate the enzymes used in the dispersion. Alternately, the thawing treatment of the first step may be performed while immersing the vegetable material in the dispersion. Moreover, the vegetable material may undergo a blanching step before the process, as shown in the examples.

In this process, the vegetable material is immersed in a dispersion comprising water and enzymes. The inventors believe that the immersion of the vegetable material in a high quantity of water is undesirable because the colour intensity and the flavour intensity of the vegetable material decrease after immersion in a large quantity of water, due to the dilution of flavour and colour molecules in water. In addition, heat-treatments are known to deteriorate the raw aromas and the natural colours of vegetable materials.

WO 2006/056341 A1 discloses a method for the preservation of a vegetable material. The vegetable material is packed in a flexible pouch together with edible oil in an amount such that the vegetable material is either immersed in the oil or surrounded by a film of oil. The air is removed from the pouch. The pouch containing the vegetable material with oil is then sealed. The sealed pouch is thereafter exposed to ultra high pressure (UHP) ranging from 50-1000MPa for 0.5 to 50 minutes at a temperature ranging from 0-70°C.

Before the UHP treatment, the vegetable material may be fried in a frying oil. Moreover, during UHP treatment, the oil may have a temperature above 55°C. The inventors believe that these steps deteriorate the raw aromas and the natural colours of vegetable materials. Moreover, during frying, the vegetable material develops roasted or grilled flavours instead of fresh or natural flavours.

XP055368083 discloses a method for sous-vide cooking of strawberries. It is emphasized that form and colour of the fruits are barely influenced while the taste is more aromatic after the sous-vide treatment.

Other technologies exist for the preparation of fruit compositions with pieces. An example is ohmic heating. A drawback of ohmic heating is the electrolytic decomposition of the electrodes and the need of enough liquid in the composition. Another example is microwave treatment. A drawback of microwave treatment is a partial destruction of sensory attributes and quality attributes of food products, especially heat-labile nutrients such as vitamins for example. Microwave treatment is also known to generate new flavours which can be undesired in fruit compositions. In addition, some consumers are reluctant to use microwaved products. Alternatively, it is also possible to add aromas to the vegetable composition. However, this misses the objective of a simple product with fewer additives. Also, the final flavour of such composition is not similar to the flavour of fruits freshly picked from the garden.

It would therefore be desirable to provide vegetable compositions, in particular fruit compositions, which consumers may perceive as fresh by a process for making such vegetable compositions.

## SUMMARY OF THE INVENTION

The object of the present invention is to improve the state of the art, and in particular to provide a process that overcomes the problems of the prior art and addresses the needs described above, or at least to provide a useful alternative.

The process developed by the inventors overcomes the cited drawbacks of microwave treatment by providing a safe vegetable composition with improved favour, colour and nutritional values.

The inventors were surprised to see that the object of the present invention could be achieved by the subject matter of the independent claims. The dependent claims further develop the idea of the present invention.

Accordingly, a first aspect of the invention relates to a process of making a vegetable composition comprising the steps of providing vegetable material having a size of 10 to 50 mm, adding up to 5 wt% of water based on the weight of vegetable material, and performing a maturation of said vegetable material which comprises a) a step of heating the vegetable material to a temperature of 35°C to 55°C, followed with b) a step of maintaining the vegetable material at a temperature between 35°C to 55°C during 45 to 480 minutes, to obtain said vegetable composition, wherein said vegetable material is not homogenised prior to the maturation, wherein at least the maturation is performed under a neutral atmosphere, said neutral atmosphere being obtained by using a food-grade inert gas in a closed system or under vacuum, wherein after said maturation under vacuum, said vegetable composition is pasteurized.

In an embodiment, the heating step is performed at a rate of 0.10°C to 1.00°C per minute.

In an embodiment, the maturation comprises the following consecutive steps:

- heating the vegetable material for 30 to 50 minutes to reach a temperature between 35°C and 43°C, then
- heating the vegetable material for 10 to 20 minutes to reach a temperature between 43°C and 48°C, then
- heating the vegetable material for 45 to 90 minutes to reach a temperature between 48°C and 55°C,
- maintaining the vegetable material at a temperature between 48°C and 55°C, during 45 minutes to 80 minutes.

In an embodiment, said vegetable composition is pasteurised after said maturation step under neutral atmosphere.

In an embodiment, said vegetable composition is cooled down to a temperature between 5°C and 25°C after said maturation or, where relevant, after said pasteurisation.

In an embodiment, the vegetable material consists of whole fruits, fruit pieces, whole vegetables, vegetable pieces, or mixes thereof.

In an embodiment, the vegetable material consists of a single plant species.

In an embodiment, the vegetable material is provided frozen prior to the maturation.

In an embodiment, the added water comprises a culinary flavouring.

The maturation is performed under a neutral atmosphere or under vacuum.

In an embodiment, the vegetable material is placed in a pouch, and the pouch is sealed, prior to the maturation.

The vegetable material is not homogenised prior to the maturation.

These and other aspects, features and advantages of the invention will become more apparent to those skilled in the art from the detailed description of embodiments of the invention, in connection with the attached drawings.

## BRIEF DESCRIPTION OF THE DRAWINGS

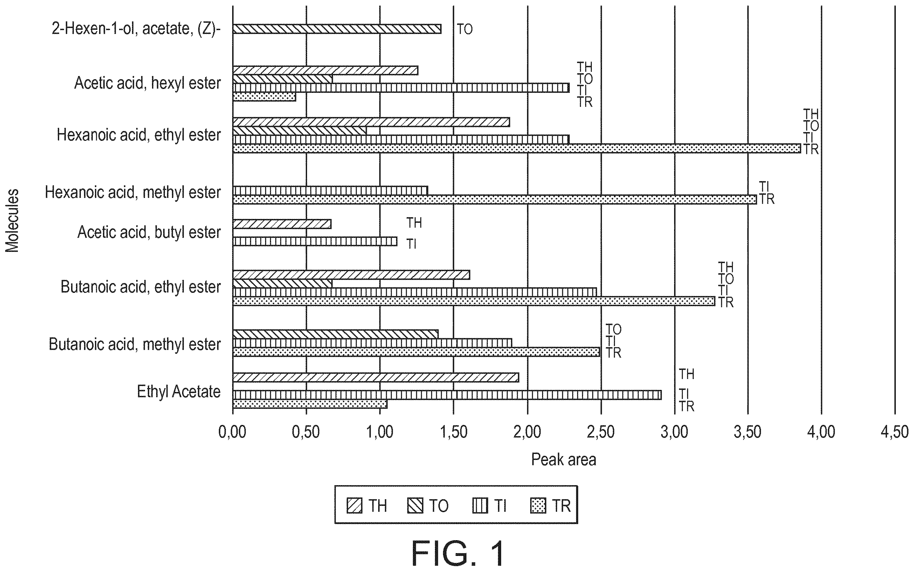

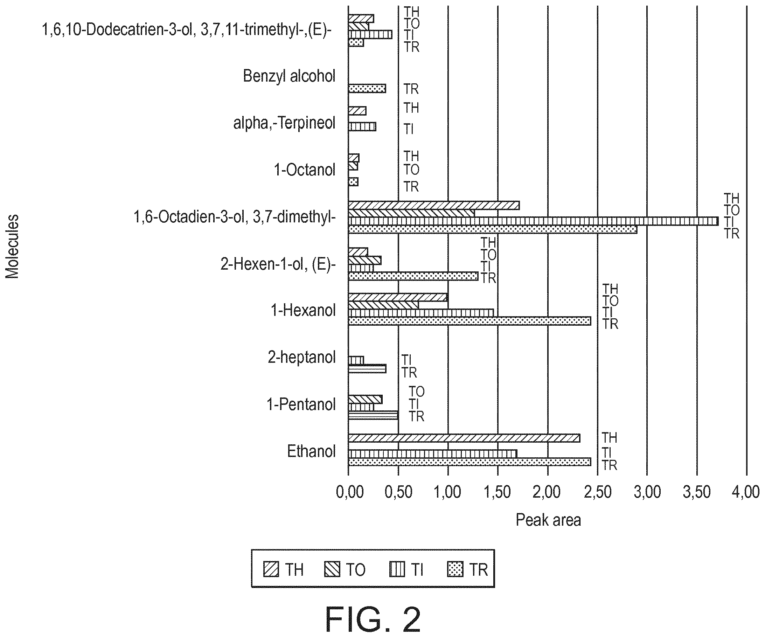

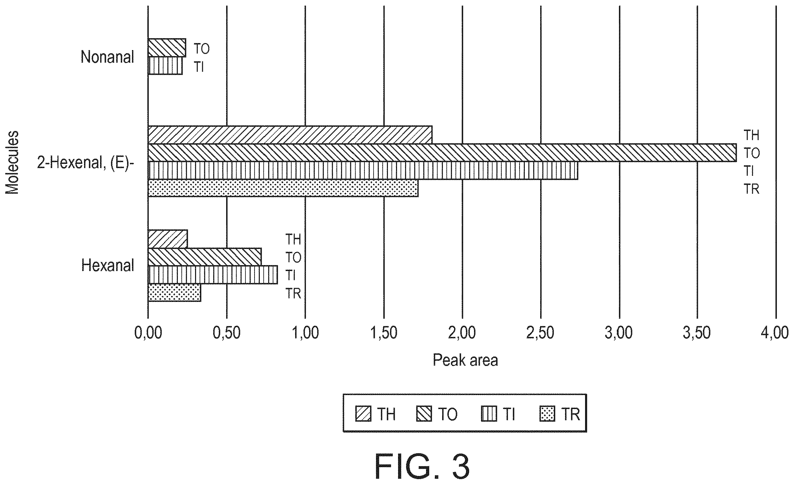

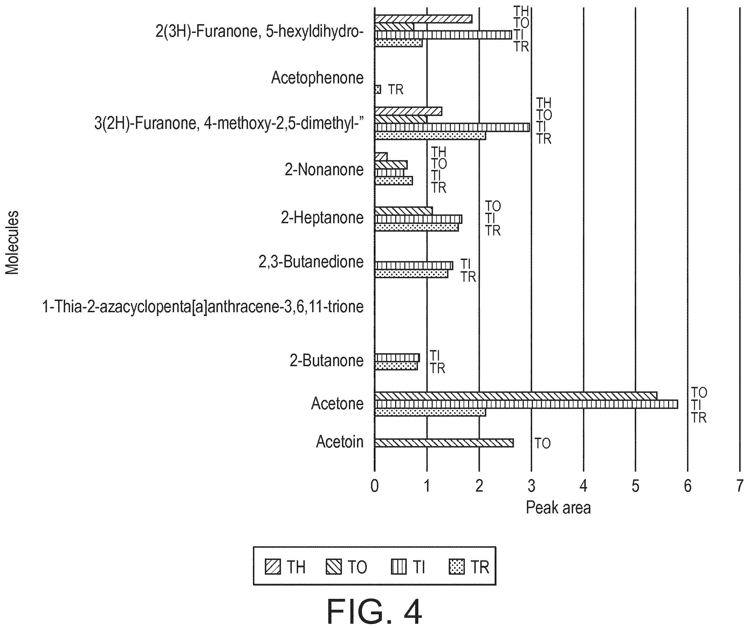

Figures 1, 2, 3 and 4 show the ester profile (Figure 1), alcohol profile (Figure 2), aldehyde profile (Figure 3) and ketone profile (Figure 4) based on GC/MS analysis of such compounds of different samples of strawberry. TR (reference) = Frozen strawberry, no maturation and no pasteurisation (blue on original figures). TH (standard heat treatment) = Frozen strawberry, no maturation, pasteurised under inert atmosphere (purple on original figures). TI (invention) = Frozen strawberry, with maturation according to the invention, under inert atmosphere and pasteurised (red on original figures). TO (ohmic) = Frozen strawberry treated by ohmic heating (green on original figures). Refer to Example 1.

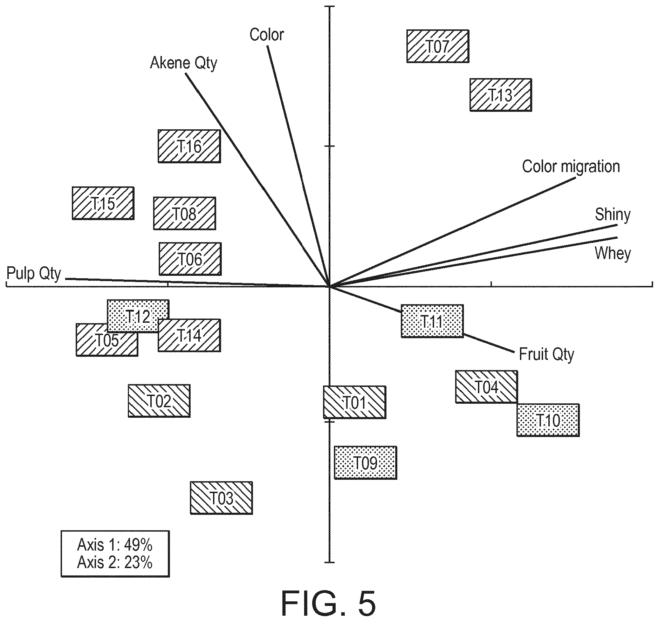

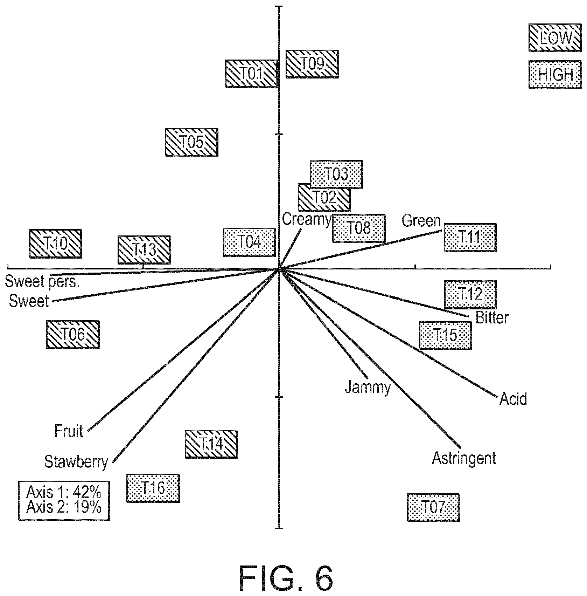

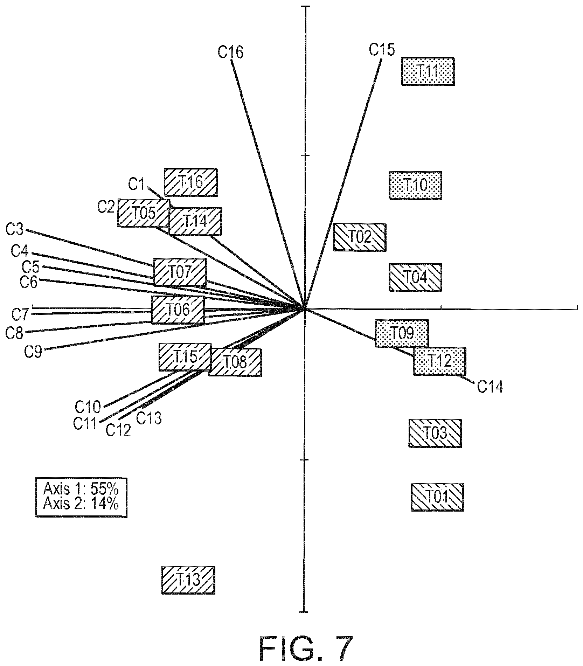

Figures 5, 6 and 7 show sensory maps on appearance (Figure 5), on taste (Figure 6) and on GC-MS: absolute abundance of aroma molecules (Figure 7). The T01-T16 references on the labels correspond to the trial numbers in Table 3, Example 3. On Figures 5 and 7, reference treatment was in orange (T01-T04), ohmic treatment was in light red (T09-T12) and the treatment according to the invention was in red (T05-T08 and T13-T16). On figure 6, the label of the different samples are coloured according to the acidity of the white base either in light yellow (LOW) and dark yellow (HIGH). Refer to Example 3.

## DETAILED DESCRIPTION OF THE INVENTION

As used in the specification, the words "comprise", "comprising" and the like are to be construed in an inclusive sense, that is to say, in the sense of "including, but not limited to", as opposed to an exclusive or exhaustive sense.

As used in the specification, the word "about" should be understood to apply to each bound in a range of numerals. Moreover, all numerical ranges should be understood to include each whole integer within the range.

As used in the specification, the singular forms "a", "an", and "the" include plural referents unless the context clearly dictates otherwise.

Unless noted otherwise, all percentages in the specification refer to weight percent, where applicable.

The term "fruits" is used in the current specification in the culinary sense of the word. Fruits are the fleshy seed-associated structures of a plant that are sweet and edible in the raw state, such as apples, oranges, grapes and strawberries. This includes fruits from cultivated varieties of plants which produce seedless fruits such as seedless grapes. The term "fruits" is not used here in the botanical sense. For example, beans, nuts and cereal grains are not considered as fruits in the context of the current invention, while strawberries are considered as fruits in the context of the present invention. Usually, fruits are used in desserts and in sweet preparations, raw or cooked. The fruit may be selected, for example, from blackcurrant, cranberry, elderberry, red currant, white currant, boysenberry, grape, cherry, orange, lemon, lime, yuzu, mandarin, tangerine, grapefruit, pineapple, mango, papaya, , kiwifruit, guava, apple, plum, peach, nectarine, strawberry, raspberry, blueberry, blackberry, bilberry, apricot, pear, wolfberry, pomegranate, tangelo, dragonfruit, cloudberry, damson, durian, gooseberry, kumquat, lychee, melon, watermelon, mulberry, persimmon, pomelo, purple mangosteen, star fruit and mixtures of these. The fruit may have a sugar content in its fresh ripe state of greater than 4 wt.%.

The term "vegetables" is understood to refer to edible plants or parts of plants, such as roots, stems, leaves, buds, botanical fruits, and other plant organs. Usually, vegetables are intended for cooking or for eating raw, in savoury or sweet and sour dishes. Vegetables include edible mushrooms. Fruits, i.e. culinary fruits as defined above, are sometimes used as vegetables, for example in sweet and sour dishes or in sauces. The vegetable may be selected, for example, from avocado, asparagus, bean, beetroot, broccoli, Brussels sprout, Bamboo shoot, cabbage, carrot, cauliflower, celery, celeriac, Chinese cabbage, Chickpea, cucumber, daikon, edible algae, eggplant, chicory, fennel, garlic, Jerusalem artichoke, kale, leek, lentil, onion, olive, parsnip, pea, pepper, pumpkin, potato, sweet potato, radicchio, romanesco, shallot, soybean, spinach, squash, turnip, zucchini, tomato, edible mushrooms such as *Boletus edulis, Cantharellus cibarius, Cantharellus tubaeformis, Pleurotus ostreatus, Amanita caesarea* and mixtures thereof.

"Vegetable material" or "vegetable composition" are understood to include fruits and vegetables, both as defined above. Where needed, the distinction between fruits and vegetables will be indicated.

The term "puree" is understood to mean crushed or homogenised cooked vegetable material having a consistency allowing their consumption using a fork for example. The term "puree" may also commonly designate slurries, mousselines, compotes and vegetable creams.

The term "pasteurisation" is understood to mean an inactivation or the suspension of the growth cycle of all vegetative microbes, for example by means of heat, pressure and/or freezing. Preferably, pasteurisation is performed by means of heat.

The term "blanching" is understood to mean the thermal treatment of whole fruits or vegetables, or pieces thereof, which is generally performed using steam or hot water to block enzymatic degradations and microbial development. Blanching is generally performed at a temperature ranging from 75°C to 120°C for 1 to 10 minutes.

Unless defined otherwise, all technical and scientific terms have and should be given the same meaning as commonly understood by one of ordinary skill in the art to which this invention belongs.

In a first aspect, the present invention relates to a process of making a vegetable composition. This process comprises several consecutive steps which will be outlined below. Initially, vegetable material is provided and up to 5 wt% of water, based on the weight of vegetable material, is added. The vegetable material has a size of 10 to 50 mm. Then maturation of the vegetable is performed, in order to obtain said vegetable composition. Maturation ensures the optimal development of flavour and aroma in the vegetable material. Maturation itself comprises several steps: a) a step of heating the vegetable material to a temperature of 35°C to 55, then b) a step of maintaining holding the vegetable material at a temperature between 35°C to 55°C during 45 to 480 minutes.

The vegetable material is provided with a size of 10 to 50 mm. Preferably, the vegetable is provided with a size of 10 to 30 mm, and more preferably a size of 10 to 25 mm. The size of the vegetable material depends on the plant species and can be determined through common measures by a skilled person in the art. The provision of pieces of vegetable material with a predetermined size improve heat penetration in vegetable materials. Without wishing to be bound by theory, the inventors believe that as a consequence, endogenous enzymes relative to colour and flavour synthesis may be more active.

In an embodiment, the vegetable material may be provided as whole fruit, fruit pieces, whole vegetable, vegetable pieces, or mixes thereof, within the sizes mentioned above. For instance, the vegetable material may comprise whole fruits and fruit pieces. In an embodiment, the vegetable material consists of a single plant species. In other words, only one type of fruit or vegetable is processed at the time. When it is appropriate, fruits or vegetables are peeled and the non-edible parts of fruits or vegetables, such as the stone or the seeds, are discarded. For instance, smaller fruits or vegetables may be provided as whole fruits or vegetables, while it may be required to cut larger fruits or vegetables into pieces of the appropriate size. For example, small fruits or vegetables include blueberry, blackberry, bilberry, cherry, lychee, strawberry, raspberry, and olive. For example, large fruits or vegetables include apple, apricot, mango, peach, pineapple, plum, carrot, potato and tomato.

For instance, the vegetable material may be provided frozen or fresh, preferably frozen. Within the context of the present invention, the term "frozen" refers to a vegetable material which is at a temperature of 0°C and below, for instance down to -28°C. The vegetable material can be a frozen form from fresh vegetable material. Vegetable material may be frozen by using freezing technologies well known in the art, such as cryogenic freezing technology with liquid nitrogen immersion, liquid carbon dioxide immersion or mechanical freezing technology. The freezing step can be inline or offline. More preferably, the vegetable material is frozen using a mechanical freezing technology such as Individually Quick Frozen Technology (IQF). The choice of the most suitable freezing technology is a routine task of a person of ordinary skill in the art by taking into account various aspects such as the product market life, the plant flexibility, or costs.

As an example of a preferred embodiment, the vegetable material may be whole strawberries or strawberry pieces or a mix of whole strawberries with strawberry pieces. The whole strawberries and/or strawberry pieces may be provided fresh or frozen. Preferably, strawberries are provided frozen.

As mentioned previously, the process according to the invention comprises adding up to 5 wt% of water based on the weight of vegetable material. Preferably, up to 3 wt% of water based on the weight of vegetable material is added to the vegetable material. Even more preferably, no water is added to the vegetable material prior to the maturation step. The inventors believe that adding no or a minute amount of water will yield a better colour and flavour, at least partly due to a lower dilution. The inventors also believe that this may lead to less hydrolysis of flavour and colour molecules. A minute amount of water represents up to 5 wt% of water based on the weight of vegetable material, or less.

When water is added, it may contain one or more culinary flavouring. When no water is added, culinary flavourings may be added directly in the vegetable material before the maturation step. Culinary flavourings may also be added after the maturation step. Examples of culinary flavouring suitable for this invention include sugar, salt, honey, spices, flower essences or herbs. Examples of spices suitable for this invention include pepper, vanilla, cinnamon, saffron, clove, curry, anise, cardamom, liquorice, ginger. Examples of herbs suitable for this invention include basil, lemongrass, thyme, tarragon, coriander, mint, verbena, chamomile, chive, sage, parsley, oregano, lemon balm, rosemary, marjoram, dill, orange blossom. Examples of flower essences suitable for the invention include rose essences, lavender essences, orange blossom essences, violet essences. The type, concentration and combination of culinary flavouring may be chosen by a person having ordinary skill in the art, depending on the final product.

Moreover, when it is appropriate, processing ingredient may be mixed in the added water and/or directly in the vegetable material. The term "processing ingredient" is understood to refer to food additives and food processing aid in their common sense in the field of food preparation. Culinary flavourings as defined above, dyes and aromas are excluded from the definition of processing ingredient. Example of processing ingredients include bacteriostatic agents, and thickening agents.

Examples of bacteriostatic agent suitable for the invention include the bacteriocins described in EP 0759469 and EP 0521240.

Examples of thickening agents suitable for the invention include such as starch or carboxymethylcellulose.

As mentioned before, processing ingredients can be added in the water and/or in the vegetable material directly. Optimal conditions of use of processing ingredients can be easily determined by a person having ordinary skill in the art, such as suitable temperatures to carry out a fermentation with lactic bacteria. As another example, the addition of bacteriostatic agent will depend on the duration of heat treatment, the level of carbohydrates, the type of vegetable materials, and microbiological contamination.

Preferably, no processing ingredients are added in the water nor in the vegetable material. This ensures that the final vegetable composition have a short list of ingredients.

In an embodiment not being part of the present invention, part of the vegetable material may be homogenized prior to the maturation step. Homogenization correspond to a size reduction of the vegetable material into a puree or a coulis. Homogenization liberates water from the vegetable material, which may improve the heat transfers within the vegetable composition during the maturation step. However, the result of homogenization is that vegetable pieces and whole vegetables are not visible anymore. In order to retain some visible vegetable pieces, less than 40 wt% of the vegetable material is homogenized. In the present invention, the vegetable material is not homogenised prior to the maturation step.

As mentioned previously, the maturation step comprises a) a step of heating the vegetable material to a temperature of 35°C to 55°C, which is a target temperature, followed with b) a step of maintaining the vegetable material at a temperature between 35°C to 55°C, or holding temperature, during 45 to 480 minutes. The maturation step can be performed, for example, in a standard autoclave.

The vegetable material does not undergo a heat-treatment at a temperature above 35°C before the maturation step. For example, the vegetable material does not undergo a blanching step before the maturation step.

In addition, the process according to the invention, and in particular the maturation step, is not performed in the presence of an added fat. "Added fat" is understood as an ingredient having a lipid content above 50% by weight and which is not naturally present in the vegetable material. For instance, added fat include vegetable or animal oils or fats. Added fat are avoided because they may impart undesirable flavour notes and/or off-notes to the vegetable material. For instance, during heat treatment in the presence of added fat, the vegetable material develops roasted or grilled flavours instead of the targeted fresh or natural flavours. In addition, added fat adversely affects the nutritional profile of the vegetable material by significantly increasing the fat content of the vegetable composition.

In an embodiment, the heating step (a) to reach the target temperature is performed at a rate of 0.10°C to 1.50°C per minute. Preferably, the heating step (a) is performed at a rate of 0.20°C to 1.20°C per minute. Preferably, the heating rate ranges from 0.30°C to 1.10°C per minute. The duration of the heating step can be determined by the following formula (Target Temperature - Start Temperature) / Heating Rate, where the temperatures are expressed in Celsius degrees (°C) and the heating rate in °C/minute. Preferably, the duration of the heating step ranges from 20 to 500 minute when using frozen vegetable material as a starting material. When the starting material is at an ambient temperature, i.e. from 15°C to 20°C, the duration of the heating step ranges from 10 to 400 minutes.

Once the target temperature is reached, the vegetable material is maintained, or held, at a holding temperature between 35°C and 55°C during 45 to 480 minutes. In preferred embodiments, the holding temperature ranges from a minimum of 35°C, 36°C, 37°C, 38°C, 39°C, or 40°C, to a maximum of 55°C, 54°C, 53°C, 52°C, 51°C, or 50°C. In preferred embodiments, the holding time ranges from a minimum of 45 minutes, 60 minutes, 80 minutes, 100 minutes, 125 minutes, 150 minutes, 160 minutes, 170 minutes, 180 minutes, 190 minutes, 200 minutes, 225 minutes, or 250 minutes, to a maximum of 480 minutes, 470 minutes, 460 minutes, 450 minutes, 425 minutes, 400 minutes, 375 minutes, or 350 minutes. For instance, the heat treatment is performed by maintaining the vegetable material at a temperature between 40°C and 50°C during 180 to 420 minutes. Also for instance, the heat treatment is performed by maintaining the vegetable material at a temperature between 45°C and 50°C during 150 to 240 minutes. Such heat treatment with mild temperature condition aims at providing optimal thermal condition for endogenous enzyme involved in flavour and pigment synthesis. As a consequence, heat treatment is a major step for improving color and flavour of vegetable material by catalysing flavour and pigment synthesis using precursor compounds of vegetable material.

In a more specific embodiment, the maturation of the vegetable material is performed as follows: the vegetable material is heated for 30 to 50 minutes to reach a temperature of from 35°C to 43°C, for example 45 minutes of heating to a temperature of 41°C. Next, the vegetable material is heated for 10 to 20 minutes to reach a temperature of from 43°C to 48°C, for example 15 minutes of heating to a temperature of 45°C. Then, the vegetable material is heated for 45 to 90 minutes to reach a temperature of from 48°C to 55°C, for example 60 minutes of heating to a temperature of 48°C. Finally, the vegetable material is maintained for 45 to 80 minutes at a temperature of from 48°C to 55°C, for example 48°C. The examples mentioned in this paragraph are especially suitable for berries in general, such as strawberry, raspberry, cherries, or redcurrant.

Moreover, the process may comprise an additional step of pasteurisation after the maturation step under neutral atmosphere, alternatively the process comprises an additional step of pasteurisation after the maturation step under vacuum. In general, the pasteurisation step may be performed according to various technology, especially by means of heat, pressure and/or freezing for example.

Pasteurisation by means of heat is performed at a temperature between 60°C and 130°C for 2 to 30 minutes. More preferably, pasteurisation by means of heat is performed at a temperature of 92 °C during 2 minutes. Pasteurisation by means of heat is preferably used for vegetable materials which are suitable for consumption when they are cooked, that-is-to-say when they are cooked at temperature greater than 70°C.

Pasteurisation by means of pressure is performed at a pressure greater than 200 MPa, preferably greater than 500MPa, for 1 to 30 minutes at a temperature between -5°C and 70°C, for example. Pasteurisation by means of pressure is preferably used for vegetable materials which are suitable for consumption when they are raw or fresh, that-is-to-say when they are not usually treated at a temperature greater than 60°C.

Pasteurisation by means of freezing is performed to a temperature between -25°C and -50°C, especially between -30°C and -40°C. Pasteurisation by means of freezing is preferably used for vegetable materials which are suitable for consumption without further cooking, after thawing.

The various types of pasteurisation are well known the person having ordinary skill in the art, who will be able to adapt them to the vegetable material.

In an embodiment, the process comprises a step of cooling down the vegetable composition to a temperature between 5°C and 25°C after the maturation step, or where relevant, after pasteurisation. This may be interesting for direct use of the vegetable composition in a downstream food preparation process.

The maturation is performed under a neutral atmosphere or under vacuum. A neutral atmosphere is obtained using inert gas in a closed system. More particularly, it is important to use a food-grade inert gas, such as $CO_2$, nitrogen, argon, helium, alone or as mixture. For example, the neutral atmosphere has an oxygen partial pressure of less than 0.05 atm. For example, a neutral atmosphere is obtained by introducing nitrogen at a pressure between 0.1 and 1.5 bar, preferably between 0.2 and 0.4 bars in a closed tank, such as a double-jacketed tank. The inventors believe that neutral atmosphere and vacuum prevent endogenous oxidative enzymes from destroying vegetable material endogenous molecules of interest during the process, such as endogenous flavour or endogenous pigment from vegetable material.

In a preferred embodiment, vacuum is obtained by using sealed pouches. Indeed, the vegetable material in the process of the invention is placed in a pouch, and the pouch is sealed prior to heat treatment. The pouch is made of a material which respects at least the following features: heat sealable, water resistant, food grade at high temperature and low pH. A skilled in the art can easily select the materials for pouches which are compliant to previous features. Examples of such pouches are aluminium pouches or certain plastic pouches. Volume and form of the pouches can be easily adapted by a person having ordinary skills in the art according to the quantity of vegetable material and the type of vegetable material provided in the process.

In another embodiment, the vegetable composition may be homogenized after the maturation step, and/or after the pasteurisation step. This may be interesting in order to prepare a vegetable puree or coulis, for use in a downstream food preparation process. However, homogenization destroys the structure of the vegetable pieces and results in a product that cannot be identified visually anymore. However, thanks to the specific maturation step, the homogenized vegetable composition retains colour, flavour and aroma characteristics which are desirable.

Alternatively, the vegetable composition may be concentrated or dried after the maturation step or after the optional pasteurisation. For example, the vegetable composition may be concentrated by evaporation under vacuum, distillation or ultrafiltration. The concentrate may be pasteurised or spray-dried or freeze-dried for example, possibly after homogenization. A water-soluble powder with enhanced fresh flavour can thus be obtained. In a variant of the process, volatile flavors recovered by condensation during the evaporation or distillation step are added to the concentrate and the mixture obtained is dried where appropriate after addition of a water soluble carrier, such as maltodextrins. Preferably, the final powder comprises at least 10% by weight of dried vegetable extract relative to the weight of the water-soluble support. Preferably, the final powder comprises less than 10 wt% of maltodextrin.

Further advantages and features of the present invention are apparent from the figures and non-limiting examples.

**EXAMPLES**

**Example 1: Impact of the process on strawberries**

The objective of this trial is to assess the impact of the process, more particularly, the maturation step, on the quality and organoleptic features of the vegetable material. The representative material is strawberry.

**1.1. Materials & Methods**

**1.1.1. Strawberry purées**

Four strawberry purees were prepared with the strawberry variety Senga sengana, using the recipe presented in Table 1. No additives were used in the preparation of the purees. The four strawberry purees underwent the following different treatments:

Reference treatment without heat-treatment (TR): A puree did not undergo any heat treatment. IQF *Senga sengana* were thawed overnight, mixed into puree with a hand blender. This puree is a reference and enables to compare and contrast the results obtained for processed puree with those of fresh strawberry.

Treatment according to the invention (TI): A puree underwent the process with a maturation step according to the invention: Frozen IQF *Senga sengana* were put in the bowl of a mini tank IKA. Once inert atmosphere had been created, agitation was set up at 280 rpm. Then, a thermal process was performed as follows: 4 min to go up to 40°C, a maturation step of 60 minute at 40°C, 10 minute to go up to 92°C, a pasteurisation step for 2 minute at 92°C and 30 minute to decrease to 25°C. The parameters of pasteurisation, that-is-to-say 2 min at 92°C, were those applied in a standard pasteurisation of fruit puree to ensure product safety.

Reference treatment with heat treatment (TH): A puree underwent a process without maturation step: Frozen IQF *Senga sengana* were placed in the bowl of a mini tank IKA. Once inert atmosphere had been created, agitation was set up at 280 rpm. Then, a thermal process was performed as follow: 10 minutes to go up to 92°C, a pasteurisation step for 2 minutes at 92°C and 30 minutes to decrease to 25°C. The parameters of pasteurisation, that-is-to-say 2 min at 92°C, were those applied in a standard pasteurisation of fruit puree to ensure product safety.

Ohmic reference (TO): A strawberry preparation was provided by a supplier. This preparation was composed of 70.00% cubed strawberry, 24.00% whole strawberries and 6.00% strawberry puree, seedless. Strawberries used to prepare the puree have been harvested when they reached their full growth maturity. This optimal maturity was determined by regular measurement of Brix, pH and weight of the fruits, as well as physical and organoleptic characteristics (color, taste and texture). Strawberries used whole or cubed, were not mature fruits. The strawberry preparation underwent a ohmic treatment as described in WO 2009/066022 A1.

Table 1

| Ingredients | Quantity % |
|---|---|
| Sugar | 8.70% |
| IQF* *Senga sengana* strawberry | 86.95% |
| Water | 4.35% |
| * IQF means Individually Quickly Frozen | |

### 1.1.2. Strawberry yogurts

The four strawberry purees obtained were blended with plain yogurt, according to the recipe shown in Table 2. The samples generated were subjected to chromatography analyses and technical sensory evaluation by a team of trained panellists.

The aromatic volatile compounds of the four strawberry yogurts were analyzed by capillary gas chromatography coupled with a mass spectrometer (GCMS). The effect of the four treatments of the strawberries was measured by comparing the four aromatic profiles. More than 50 volatile compounds were identified in the samples with the chosen chromatography methodology. Some of them did not have any interest from a sensory point of view which is why they are not mentioned in the result analysis below.

Technical sensory testing was performed. They were blind informal tasting sessions organized with 6 to 8 trained panellists. The different variants were presented coded. Panellists were asked to evaluate color, odor, taste and texture.

Table 2

| Ingredients | Quantity % |
|---|---|
| Sugar | 8.50% |
| Strawberry puree | 20.00% |
| Plain Yogurt | 71.50% |

### 1.2. Results

### 1.2.1. GCMS analysis

The four different purees are identified by the treatment reference TR, TI, TH and TO as defined in the Materials and Methods section above. The treatment references are also used in Figures 1 to 4. In the original figures, TR is depicted with a blue bar, TI with a red bar, TO with a green bar and TH with a purple bar.

**1.2.1.a. Ester profile:**

Esters are generally responsible for fruity notes. They are characterized by ethereal and fruity tonalities. Depending on their chemical structure, they can have ripe or green notes, peel or pulp tonalities. They can also have buttery/cheesy nuances.

The chart of Figure 1 highlights that the formation of some esters is favored by heat treatments (whatever the treatment is: TI, TH and TO). It is the case for ethyl acetate, acetic acid butyl ester, butanoic acid butyl ester, acetic acid hexyl ester and acetic acid phenyl methyl ester.

For the four other esters identified in the samples (butanoic acid methyl ester, butanoic acid ethyl ester, hexanoic acid methyl ester and hexanoic acid ethyl ester), the quantity of esters was decreased in the heat-treated samples compared to the reference sample TR. These molecules are characterized by fruity notes, with ripe or green nuances.

However, another trend appears on the chart of Figure 1: the treatment which includes a maturation step (TI) seems to favour the preservation of the esters compared to the treatment without a maturation step (TH).

**1.2.1.b. Alcohol profile:**

In fruit flavours, alcohols are responsible for fruity, green, fatty notes. Depending on the chemical structure of the compounds, it can enhance the green notes or the ripeness of the fruits.

The results disclosed in Figure 2 are heterogeneous. It is interesting to note the amount of the alcohols with 6-carbon chains (1-hexanol and 2-hexen-1-ol E) is obviously decreased by 2 to 4 times) in treated strawberries. These alcohols are characteristic of strong green notes, enhancing the non-ripe typicity of fruits in flavours. The observation is the same for 1-pentanol and 2-heptanol. However, these molecules are more present in the sample treated with a maturation step (TI).

**1.2.1.c. Aldehyde profile:**

In fruit flavours, aldehydes are responsible for fatty, aldehyde, green, citrus notes. The graph of Figure 3 puts forward that the process without a maturation step (TH) tends to have a similar effect on the concentration of the two aldehydes identified in the reference sample (TR). Compared to the reference, the concentrations are similar, the two compounds are preserved. However, in the case of the treatment with a maturation step (TI), the concentration of hexanal and 2-hexenal (E) are respectively doubled and multiplied by 1.5. This treatment TI seems to favour aldehydes formation and preservation.

**1.2.1.d. Ketones profile:**

Ketones are responsible for cheesy, creamy, coconut notes. In fruit flavors, they can be responsible for ripe, fruity and juicy notes. It enhances the fruity notes.

The chart of Figure 4 demonstrates that almost all ketones identified in the reference samples (TR) are no longer present in the samples without a maturation step (TH). This treatment is not in favor of the preservation of ketones.

In contrast, in the sample having undergone the process with maturation (TI), the ketones were preserved.

Acetoin (3-hydroxybutanone) is characteristic of the buttery note, melted butter and is responsible for ripe notes in fruit flavors. It was identified in the ohmic sample (TO).

**1.2.2. Technical sensory tasting results:**

The yogurt using strawberry puree treated with the process of the invention (TI) was unanimously acclaimed by the group of panellists as being the closest to the reference (TR). It was judged more intense in odour and flavour than the three others.

**1.3. Conclusion**

The analyses performed highlighted a significant benefit of the maturation step of the strawberries before their pasteurization treatment. The chromatography highlighted that some molecules were preserved thanks to the maturation step. Those results were confirmed during a technical sensory tasting where the product using a maturation step according to the invention was judged to be the closest to the reference with high intensity regarding odour and flavour.

**Example 2: Sensory assessment**

The objective of this trial is to assess the impact of the recipes and processing of a strawberry yogurt on its sensory characteristics.

**2.1. Materials & Methods**

A design of experiments (DoE) approach was used to systematically modulate production settings (recipes & process), that were selected based on their predicted impact on sensory assessment.

**2.1.1. Parameters measured and product preparation**

Parameters assessed on the recipe of the white base are:

- Texture levels: low with 0% starch in white mass, or high obtained with 1,66% potato starch
- Sugar levels: 6% sugar in white mass ( = 4.8% sugar in final product) and 8% sugar in white mass (= 6,4% sugar in final product)
- pH levels: the standard 4,6, and a lower version with a pH of 4 obtained by addition of lactic.

Parameters assessed on the recipe of the fruit preparation are:

- Presence or absence of fruit pieces
- Heat treatment: standard heat treatment (TH), ohmic treatment (TO) and process according to the invention (TI)

Table 3 summarizes the parameters of the 16 variants prepared for this experiment. The samples covered a wide sensory range and sensory differences could be well explained by production settings modulations (statistical modelling). The inoculation of all the samples were made with YOMIX 413 at a rate of 20DCU/100Kg. The recipe of the white mass is presented in table 4. The strawberry yogurt was prepared by mixing 80 wt% of white mass with 20 wt% of strawberry preparation.

Table 3

| Trial # | Heat treatment | Texture | Sugar in white mass | pH of white mass | Fruit pieces |
|---|---|---|---|---|---|
| T01 | Standard | Low | 6 | 4,6 | NO |
| T02 | Standard | High | 8 | 4,6 | NO |
| T03 | Standard | High | 6 | 4 | YES |
| T04 | Standard | Low | 8 | 4 | YES |
| T05 | Invention process | High | 6 | 4,6 | NO |
| T06 | Invention process | Low | 8 | 4,6 | NO |
| T07 | Invention process | Low | 6 | 4 | YES |
| T08 | Invention process | High | 8 | 4 | YES |
| T09 | Ohmic | High | 6 | 4,6 | YES |
| T10 | Ohmic | Low | 8 | 4,6 | YES |
| T11 | Ohmic | Low | 6 | 4 | NO |
| T12 | Ohmic | High | 8 | 4 | NO |
| T13 | Invention process | Low | 6 | 4,6 | YES |
| T14 | Invention process | High | 8 | 4,6 | YES |
| T15 | Invention process | High | 6 | 4 | NO |
| T16 | Invention process | Low | 8 | 4 | NO |

Table 4

| Trials | T01 & T13 | T03 & T15 | T08 & T12 | T06 & T10 | T07 & T11 | T02 & T14 | T05 & T09 | T04 & T16 |
|---|---|---|---|---|---|---|---|---|
| Characteristics | Low viscosity Low pH Low sugar | High viscosity High pH Low sugar | High viscosity High pH High sugar | Low viscosity Low pH High sugar | Low viscosity High pH Low sugar | High viscosity Low pH High sugar | High viscosity Low pH Low sugar | Low viscosity High pH High sugar |
| liquid Skimmed Milk (%) | 82 | 80,3 | 79 | 80,25 | 82 | 79 | 80,3 | 80,25 |
| Cream (34% fat) (%) | 10 | 10 | 9,45 | 9,8 | 10 | 9,45 | 10 | 9,8 |
| Skimmed milk powder (%) | 2 | 1 | 1,85 | 1,95 | 2 | 1,85 | 2 | 1,95 |
| Sugar (%) | 6 | 6 | 8 | 8 | 6 | 8 | 6 | 8 |
| Starch Potato Etenia 457 (%) | | 1,7 | 1,7 | | | 1,7 | 1,7 | |
| Total (%) | 100 | 100 | 100 | 100 | 100 | 100 | 100 | 100 |
| Addition 0,40 ml Lactic acid | x | | | x | | x | x | |

In Table 4, "low pH" should be understood as "low acidity", ie a pH of 4.6 as shown in Table 3, and "high pH" as "high acidity", ie a pH of 4 as shown in Table 3.

### 2.1.2. Sensory testing by panelist

The 16 variants were assessed by 12 trained panelists. They were trained on the scoring of different samples using a predefined glossary: the strawberry yogurt glossary disclosed in Table 5.

During sensory sessions, the panelists evaluated the samples in monadic test using the profiling method. This method consists of scoring the product on each attributes on an 11 point scale, from 0 (character not perceived) to 10 (intense character intensively perceived). The sample design was randomized. The data acquisition was done using Fizz software (Biosystemes, Couternon, France-version 2.20E). According to the sensory evaluation good practices, the samples identified with a three-digit code number were served at ambient temperature. The panelists carried out the profiles in individual booths and scored the attributes directly on the computer screen.

All statistical analyses were performed with the use of the calculation module of FIZZ (Biosystemes, Couternon, France-version 2.20 E). The following analyses were made:

- Variance analysis: An analysis of variance with a significant level at 5% was performed on the data means of each product. It allowed the evaluation of the significant differences between the products. This variance analysis is based on the calculation of the Least Significant Difference. It forms sample groups based on the residual square mean differences.
- Principal component analysis: The PCA (Principal Component Analysis), a factorial analysis was carried out on discriminating attributes resulting from the variance analysis. It is based on the correlation matrix of sample mean obtained for each attribute. It allows to visualize relations between sensory descriptors, to position products in the sensory space and it highlights differences or similarities between the products and product groups.

### 2.1.3. Chemical analysis

The Brix, pH value and colorimetric measures analyses were done on each sample.

- The measurement of the sugar content in degree Brix was carried out using a hand-held refractometer (Model ATAGO pocket). The refractometer is accurate from 0 to 85 degree Brix with a precision of 0.2 °Brix. The reading was performed at 20 °C. Each reading was repeated 2 times and the average recorded.

- The pH values were measured using a pH-meter (Model Seven Multi from Mettler) accurate to 0.05 unit of pH. Calibration was carried out by reference to buffer samples of 4 and 7 pH. Each single reading was performed at 20°C
- Color determination was done with a Colorimeter (Minolta CM5). The results were expressed in the CIE L*a*b* system . L* is the lightness and ranges between 0 (black) to 100 (white). Colours with a*>0 possess the attribute of redness and those with a*<0 greenness; those with b*>0 yellowness and those with b*<0 blueness. The reading was performed at 20°C. Each reading was repeated 2 times and the average recorded. The precision of the method was L* ≤0.15;a*≤0.05 and b*≤0.05 Two samples would be considered as different when:

$$\Delta E = \sqrt{\Delta L^2 + \Delta a^2 + \Delta b^2} > 2$$

- Chromatography

Two external labs were contacted to determine volatile flavor compounds in samples: Laboratory A in a first time and then laboratory B. Table 6 below shows the chromatography protocol used by each laboratory.

The general protocol used by Laboratory A and Laboratory B consisted to an extraction phase of the volatile molecules with a SPME system followed by a separation on a GC column and finally a mass spectrometry detection. The reference and each sample were analyzed two times and the results were reproducible. A "blanc" analysis was performed to identify the "background noise" and eliminate the compounds present in it.

To note, the GC/MS technology for flavors performed in both laboratories was nearly the same with some differences in the protocol that led to some differences in results.

Table 5

| MODALITY | ATTRIBUTE | DEFINITION | SCALE |
|---|---|---|---|
| APPEARANCE | Overall odour | intensity of the overall odour | 0= No odour; 10= strong odour |
| | Strawberry odour | Intensity of the strawberry odour | 0= No strawberry odour; 10= strong strawberry odour |
| | Colour | Intensity of the colour | 0= light color; 10= dark colour |
| | Pulp quantity | Quantity of fruit pulp visible on the surface of the product | 0= no pulp; 10= high amount of pulp |
| | Akenes quantity | Quantity of fruit akenes on the surface of the product | 0= no akenes 10= high amount of akenes |
| TEXTURE IN MOUTH | Firm | ength needed to deform or penetrate the product with a spoon (half spoon in the product) | 0= not firm: 10= very firm |
| APPEARANCE | Pulp quantity | Quantity of fruit pulp in the top half of the product | 0= no pulp; 10= high amount of pulp |
| | Akenes quantity | Quantity of fruit akenes in the top half of the product | 0= no akenes 10= high amount of akenes |

(continued)

| MODALITY | ATTRIBUTE | DEFINITION | SCALE |
|---|---|---|---|
| FLAVOURS | Acid | Intensity of the basic taste characterized by solutions of acids such as lactic acid, | 0= not acid, mild; 10= very acid |
| | Bitter | Intensity of the basic taste characterized by solutions of caffeine or quinine | 0= not bitter; 10= very bitter |
| | Sweet | Intensity of the basic taste characterized by solutions of sucrose | 0= not sweet 10= very sweet |
| | Astringent | Tightening of the papillae, feeling of drying which leaves the tongue raspy | 0= not bitter; 10= very bitter |
| | fruit flavor | Global intensity of the fruity flavour | 0= not astringent; 10= very astringent |
| | Strawberry flavor | Global intensity of the strawberry flavour (right identification of the fruit) | 0= no strawberry flavor; 10= strong strawberry flavor |
| | Jamm, | Intensity of the cooked strawberry flavor/Jammy flavor. | 0= no jammy flavor; 10= strong jammy flavor |
| | Green | Intensity of the cut grass flavor note, strawberry leaves flavor | 0= no green flavor; 10= strong green flavor |
| | Ripe | Intensity of the ripe strawberry flavor | 0= no ripe flavor: 10= strong ripe flavor |
| | Caramel | Intensity of the brown sugar flavor, caramel flavor | 0= no caramel flavor; 10= strong caramel flavor |
| | Floral | Intensity of the floral flavor, perfume note | 0= no floral flavor; 10= strong floral flavor |
| | Candy | Intensity of the candy flavor, arlequin candy | 0= no candy flavor; 10= strong candy flavor |
| | Vanilla | Intensity of the vanilla flavor | 0= no vanilla flavor; 10= strong vanilla flavor |
| | Wild strawberry | Intensity of the wild strawberry flavor | 0= no wild strawberry flavor; 10= strong wild strawberry flavor |
| | Raspberry | Intensity of the raspberry flavor | 0= no raspberry flavor; 10= strong raspberry flavor |
| | Creamy milky | Intensity of specific plain cream flavour (not sour cream) | 0= no creamy milky flavor; 10= strong creamy milky flavor |
| | Rancid | Intensity of rancid flavour (e.g. butyric acid) | 0= no rancid flavor; 10= strong rancid flavor |
| | Persistency | Intensity of global flavour after swallowing the product | 0= not persistent; 10= very persistent |

(continued)

| MODALITY | ATTRIBUTE | DEFINITION | SCALE |
|---|---|---|---|
| TEXTURE IN MOUTH | Thick | Strength necessary for the tongue to move/squeeze the product in mouth against the | 0= not thick; 10= very thick |
| | Sticky | Extent to which the product sticks to the teeth or palate during biting and chewing or during movement in the mouth Hard Strength needed to break the product | 0= not sticky 10= very sticky |
| | Powdery | A tactile sensation in the mouth provoqued by the presence of tiny particles like undissoived powder or flour. Especially perceivable on teeth surface, the upper front teeth and in the throat while chewing | 0= not powdery; 10= very powdery |
| | Akenes in mouth | Evaluate the quantity of akenes perceptible in mouth | 0= no akenes 10= high amount of akenes |
| | Fat coating | Perception of exuding fat on the palate after swallowing product | 0= not fat coating; 10= very fat coating |

Table 6

| | Laboratory A | Laboratory B |
|---|---|---|
| **Fixation of the volatile:** | | |
| **Phase 1:** | | |
| **Extraction SPME** | | |
| **Quantity of sample** | **5g** | **2g** |
| **SPME cartridge type** | **Divinylbenzen/carboxen/PDMS** | **Divinylbenzen/carboxen/PDMS** |
| **Incubation time** | **10 min 60°C** | **30 min 65°C** |
| **Extraction time** | **15 min 60°C** | **30 min 65°C** |
| **Desorption time** | **1 min** | **3 min** |
| **Extraction time** | **15 min 60°C** | **30 min 65°C** |
| **Extraction time Internal standards** | **15 min 60°C** | **30 min 65°C** |
| **Phase 2:** | **None** | **Paraldéhyde Methanolic acid** |
| **Separation by GC** | | |
| **Injection** | **Spitless** | **Spitless** |
| **Column** | **Shimadzu WAX SN/52191-04A** | **HP-FFAP** |
| | **30m‡250μm*0.25μm** | **50m‡200μm‡0.3μm** |
| **Initial temperature** | **60°C** | **36°C** |
| **Final temperature** | **240°C** | **250°C** |
| **Heating rate** | **8°C/min** | **4°C/min** |
| **Gas flow** | **1.3 ml/min** | **1.5 ml/min** |
| **Phase 3:detection** | | |
| **MS simple Quad** | | |
| **Low Mass** | **30** | **30** |
| **Hight Mass** | **400** | **400** |
| **MS Source** | **230°C** | **230°C** |
| **MS Quad** | **150°C** | **150°C** |

**2.2. Results**

Results of the different measures are presented in table 7.

Table 7

| | | Heat treatment | Viscosity (cm) | D° Brix | pH | Acidity Dornic | L | a | b | Fat content (%) |
|---|---|---|---|---|---|---|---|---|---|---|
| T01 | | Standard | 15 | 14,4 | 4,09 | 93 | 77,2 | 10,1 | 7,3 | 2.8 |
| T02 | | Standard | 3,25 | 14 | 4,08 | 93 | 76,7 | 9,6 | 8 | 2.8 |
| T03* | | Standard* | 3,5 | 15,8 | 3,92 | 104 | 75,7 | 10,5 | 6,5 | 2.8 |
| T04* | | Standard* | 15 | 16,3 | 3,86 | 112 | 76,7 | 12,2 | 7,8 | 2.8 |
| T05 | | Invention | 3,5 | 15,7 | 4,11 | 93 | 76 | 10,3 | 7,1 | 2.8 |
| T06 | | Invention | 14,75 | 14,7 | 4,06 | 94 | 74,1 | 11,3 | 7,3 | 2.8 |
| T07* | | Invention* | 14 | 13,4 | 3,87 | 114 | 72,4 | 12,2 | 7,2 | 2.8 |
| T08* | | Invention* | 3 | 16,3 | 3,88 | 109 | 76,7 | 11,1 | 7,2 | 2.8 |
| T09* | | Ohmic* | 3,75 | 16,1 | 4,12 | 90 | 78,1 | 10,1 | 7,3 | 2.8 |
| T10* | | Ohmic* | 15,5 | 14,4 | 4,08 | 91 | 74,9 | 10 | 6,8 | 2.8 |
| T11 | | Ohmic | 14,25 | 13,2 | 3,88 | 109 | 75,9 | 12,4 | 8,2 | 2.8 |
| T12 | | Ohmic | 3,5 | 16,3 | 3,92 | 105 | 75,3 | 12,9 | 7,6 | 2.8 |
| T13 | | Invention* | 13,9 | 14,5 | 4,05 | 95 | 72,8 | 10,9 | 5,9 | 2.8 |
| T14 | | Invention* | 2,5 | 14,2 | 4,07 | 95 | 76,6 | 10,4 | 7,2 | 2.8 |
| T15 | | Invention | 3,75 | 17,3 | 3,88 | 108 | 75,2 | 12,3 | 7,4 | 2.8 |
| T16 | | Invention | 15,75 | 16,2 | 3,82 | 115 | 74,9 | 13,1 | 7,7 | 2.8 |
| * Variants with fruit pieces | | | | | | | | | | |

These results and GC-MS results were used to perform the statistical evaluation of the experimental plan.

- Sensory map regarding appearance attributes: on the sensory mapping of Figure 5, the labels of the different samples are colored according to the fruit treatment process which was used. The process according to the invention appeared to preserve akene quantity and with such treatment the pulp quantity was higher. The color also was more intense when the strawberries had come through the invention treatment.
- Sensory map regarding taste attributes: on the sensory mapping of Figure 6, the labels of the different samples are colored according to the white base pH level. The high acidity of the finished product (pH around 3,80-3,92) has enhanced the attributes green, bitter, acid, independently from the fruit treatment. Labels are in dark yellow on the original figure. The low acidity of finished product (pH around 4,05 - 4,12) increases the sweet perception. Labels are in light yellow on the original figure. The fruit and strawberry attributes were scored the highest for samples treated with the process of the invention, either low acidity T14 or high acidity T16.

- Sensory map regarding GC-MS (absolute abundances of aroma molecule in products T01 to T16): on the sensory mapping of Figure 7, the labels of the different samples are colored according to the type of heat treatment. Table 8 below is a list of the molecules and their attributes:

Table 8

| Molecule | | Attribute |
|---|---|---|
| C1 | 2-Heptanone | Cheese, fruity, coconut, waxy, green |
| C2 | Butanoic acid | Sweet, fresh, fruity, slightly fatty |
| C3 | Hexanoic acid | cheesy fruity phenolic fatty goaty |
| C4 | 4- methoxy-2,5-dimethyl-3(2H)-furanone | Sweet caramellic cooked meaty and fruity nuances |
| C5 | Hexanoic acid ethyl ester | Sweet, pineapple, fruity, waxy and banana with a green nuance |

(continued)

| Molecule | | Attribute |
|---|---|---|
| C6 | Ethyl butanoate | Acidic, fruity, tropical with a creamy aftertaste |
| C7 | 2-Methyl butanoic acid | Fruity, dirty, acidic with a dairy buttery and cheesy nuance |
| C8 | Hexanol | Green, fruity, apple-skin and oily |
| C9 | Cis-Linalool oxide | Odor earthy |
| C10 | Butyl Acetate | Sweet, ripe banana, tropical and candy-like with green nuances |
| C11 | 4 Penten 2-ol | Odor fruity |
| C12 | Butane-2,3-dione (Diacétyl) | Sweet, buttery, creamy, milky |
| C13 | Benzaldehyde | Sweet, oily, almond, cherry, nutty and woody |
| C14 | 5 hexyldihydro 2,(3H) Fruranone | Fruity, creamy, peach and apricot with a syrupy, fatty nuance |
| C15 | Decanoic acid | soapy waxy fruity |
| C16 | Octanoic acid | Acidic, fruity, tropical with a creamy aftertaste |

Absolute abundances of most compounds are much higher in samples processed with the process of the invention:

- Largest relative differences are found for ethyl-butanoate (C6: Acidic, fruity, tropical with a creamy aftertaste), butyl-acetate (C10: Sweet, ripe banana, tropical and candy-like with green nuances) and ethyl ester hexanoic acid (C5: Sweet, pineapple, fruity, waxy and banana with a green nuance).
- Only a couple of compounds show an opposite trend: 2 (3H) furanone, 5-hexydihydro (C14: Fruity, creamy, peach), decanoic acid (C15: Soapy, waxy, fruity) and octanoic acid (C16: Rancid, soapy, cheesy).

Recipe factors had a limited impact on the compound absolute abundances:

- Samples with a low acid white base show higher abundances in 2,3-butanedione (C12: Sweet, buttery, creamy, milky) and 4-penten-2-ol (C11: Odor fruity).
- Samples with a high added sugar quantity show slightly higher abundances in hexanol (C8: Green, fruity, apple-skin, oily) and butanoic acid (C2: Sweet, fresh, fruity, slightly fatty).

### 2.3. Conclusion

A very good sensory discrimination was achieved for most sensory descriptors, in particular for those linked to the texture and fruit pieces dimensions. Modulations of the flavor profile were of smaller amplitude, but still significant for most descriptors. This result opened the door to the modelling of the impact of production settings on product characteristics, and also confirmed that the choice of experimental factors (and associated levels) was relevant.

The statistical modelling work (ANOVA-based models) showed that both process and recipe factors had an impact on product characteristics. The process had mainly an impact on the product odor and color, while the impact of the recipe was visible on multiple axes like the basic taste (impacted by the white base acidity), the texture (impacted by white base thickness) or the fruit pieces (impacted by the addition on fruit pieces).

Regarding the chemical compounds, despite their high number present in strawberry flavor, only a few of them significantly contribute to the overall flavor. Thus from literature, the three most important strawberry aromas are the DMHF (2,5-dilethyl-4-methoxy-eH-furan-3-one), the ethyl butanoate and the ethyl hexanoate.

An aroma compound at a concentration below its odor threshold value can still contribute to the "overall" aroma.

Although the invention has been described by way of example, it should be appreciated that variations and modifications may be made without departing from the scope of the invention as defined in the claims.

**Example 3: Process in pouches for different fruits**

• Strawberry:

200g of whole IQF *Senga sengana* strawberries were enclosed individually in 8 pouches under vacuum (Steriflex ® PET-O/PP* white barrier from Coveris). The maturation step was performed by heating the pouches in a stove during 120 minutes to a temperature of 50°C followed by maintaining the pouches at 50°C for 60 minutes. After maturation, the pasteurization step was performed in an autoclave at 93-97°C for 10 minutes.

• Other examples of fruits:

For each fruit of Table 9, 200g of frozen fruits (IQF or frozen) are enclosed in pouches under vacuum (Steriflex ® PET-O/PP* white barrier from Coveris). The maturation step was performed by heating the pouches containing the fruits in a stove. The time/temperature couples used for each fruit during the maturation step are indicated in table 9.

The pasteurization step was the same for all the fruits. The pasteurization step was performed in an autoclave at 93-97°C for 10 minutes.

Table 9

| Fruit | Variety | Characteristic | Temperature of maturation | DT (min) | D1 (min) | D2 (min) |
|-------|---------|----------------|---------------------------|----------|----------|----------|
| Apricot | - | IQF dices 10*10mm | 55°C | 240 | 136 | 104 |
| Blueberry | Wild | IQF whole fruits | 55°C | 480 | 120 | 360 |
| Mirabelle of Lorraine | - | IQF halves | 55°C | 300 | 120 | 180 |
| Pineapple | MG3 | IQF pieces | 35°C | 480 | 60 | 420 |
| Raspberry | Meeker or Willametta | Frozen whole fruits | 35°C | 480 | 60 | 420 |
| DT = Total duration of maturation (minutes), D1 = Duration of temperature increase (minutes), D2 = Duration of maintaining at temperature (minutes) | | | | | | |

**Example 4: Industrial process with neutral atmosphere**

• Strawberries: 40 kg of whole IQF *Senga sengana* strawberries coming from Poland calibrated with a diameter between 15 and 25 mm were used. The fruits were stored overnight at -6°C. After storage, the fruits were cut using an Urschel cutting device to obtain a strawberry preparation consisting of IQF fruits with a diameter of 10 mm.

40 kg of strawberry preparation were thereafter introduced in a double-jacketed 60L tank from the supplier Goavec engineering. Steam circulates in the double jacket of the tank. The strawberry preparation was then defrosted to a temperature ranging from 10°C to 15°.

To avoid the contact between fruits and oxygen, nitrogen was flushed at the surface of the strawberry preparation with a pressure between 0.2 and 0.4 bars.

The strawberry preparation was heated to reach a temperature of 50°C. The maturation step was then performed by maintaining the strawberry preparation at 50°C for 104 minutes with a steam pressure of 0.5 bars. After the maturation step, the strawberry preparation was pasteurised at 93°C for 150 seconds with a steam pressure of 1.5 bars. After pasteurisation, the strawberry preparation was cooled down at 25°C and packed in sterile pouches.

• Apricot: 40 kg of an apricot preparation were used. The apricot preparation consisted of IQF apricot 25*38 mm dices from Marocco. The apricot preparation was first stored overnight at -6°C.

The 40 kg of the apricot preparation was then introduced in a double-jacketed 60L tank from the supplier Goavec engineering. Steam circulates in the double jacket of the tank. The apricot preparation was then defrosted to a temperature ranging from 10°C to 15°.

To avoid the contact between the apricot preparation and the oxygen, nitrogen was flushed at the surface of the apricot preparation with a pressure between 0.2 and 0.4 bars.

The apricot preparation was heated to reach a temperature of 55°C. The maturation step was then performed by maintaining the apricot preparation at 55°C for 104 minutes with a steam pressure of 0.5 bars. The apricot preparation was then pasteurised at 92°C for 150 seconds with a steam pressure of 1.5 bars. After pasteurisation, the apricot preparation was cooled down at 35°C and packed in sterile pouches.

**Example 5: Freeze drying of the vegetable material**

A strawberry preparation was prepared according to the process for strawberries of Example 3. The strawberry preparation was then frozen at a temperature of -20°C. The frozen strawberry preparation was then freeze-dried for 96 hours with the following parameters: Product temperature : -40°C, Shelf Temperature: 20°C, Vacuum: 0.100 mbar, Safety pressure: 2.170 mbar. The freeze-dried strawberry powder was then stored at room temperature.

**Claims**

1. A process of making a vegetable composition comprising the steps of providing vegetable material having a size of 10 to 50 mm, adding up to 5 wt% of water based on the weight of vegetable material, and performing a maturation of said vegetable material which comprises a) a step of heating the vegetable material to a temperature of 35°C to 55°C, followed with b) a step of maintaining the vegetable material at a temperature between 35°C to 55°C during 60 to 480 minutes, to obtain said vegetable composition, wherein said vegetable material is not homogenised prior to the maturation, wherein at least the maturation is performed under vacuum or under a neutral atmosphere, said neutral atmosphere being obtained by using a food-grade inert gas in a closed system, and wherein after said maturation under vacuum, said vegetable composition is pasteurized.

2. The process according to claim 1 wherein the heating step is performed at a rate of 0.10°C to 1.00°C per minute.

3. The process according to claim 1 or claim 2, wherein the maturation comprises the following consecutive steps:

   - heating the vegetable material for 30 to 50 minutes to reach a temperature between 35°C and 43°C, then
   - heating the vegetable material for 10 to 20 minutes to reach a temperature between 43°C and 48°C, then
   - heating the vegetable material for 45 to 90 minutes to reach a temperature between 48°C and 55°C,
   - maintaining the vegetable material at a temperature between 48°C and 55°C, during 45 minutes to 80 minutes.

4. The process according to any one of claims 1 to 3, wherein said vegetable composition is pasteurised after said maturation under the neutral atmosphere.

5. The process according to any one of claims 1 to 4, wherein said vegetable composition is cooled down to a temperature between 5°C and 25°C after said maturation or, where relevant, after said pasteurisation.

6. The process according to any one of claims 1 to 5, wherein said vegetable material consists of whole fruits, fruit pieces, whole vegetables, vegetable pieces, or mixes thereof.

7. The process according to any one of claims 1 to 6, wherein said vegetable material consists of a single plant species.

8. The process according to any one of claims 1 to 7, wherein said vegetable material is placed in a pouch, and the pouch is sealed, prior to the maturation.

9. The process according to any one of claim 1 to 8, wherein said vegetable material is concentrated or dried after maturation or after pasteurisation.

10. The process according to any of claims 1 to 9, wherein said vegetable material is provided frozen prior to the maturation.

**Patentansprüche**

1. Verfahren zum Herstellen einer Pflanzenzusammensetzung, umfassend die Schritte eines Bereitstellens von Pflanzenmaterial, das eine Größe von 10 bis 50 mm aufweist, eines Hinzufügens von bis zu 5 Gew.-% Wasser, basierend auf dem Gewicht des Pflanzenmaterials, und eines Durchführens einer Reifung des Pflanzenmaterials, die a) einen Schritt eines Erwärmens des Pflanzenmaterials auf eine Temperatur von 35 °C bis 55 °C, gefolgt von b) einem Schritt eines Haltens des Pflanzenmaterials bei einer Temperatur zwischen 35 °C bis 55 °C während 60 bis 480 Minuten umfasst, um die Pflanzenzusammensetzung zu erhalten, wobei das Pflanzenmaterial vor der Reifung nicht homogenisiert wird,
   wobei mindestens die Reifung unter Vakuum oder unter einer neutralen Atmosphäre durchgeführt wird, wobei die neutrale Atmosphäre durch Verwenden eines Inertgases in Lebensmittelqualität in einem geschlossenen System erhalten wird, und wobei nach der Reifung unter Vakuum die Pflanzenzusammensetzung pasteurisiert wird.

2. Verfahren nach Anspruch 1, wobei der Erwärmungsschritt bei einer Geschwindigkeit von 0,10 °C bis 1,00 °C pro Minute durchgeführt wird.

3. Verfahren nach Anspruch 1 oder 2, wobei die Reifung die folgenden aufeinanderfolgenden Schritte umfasst:

   - Erhitzen des Pflanzenmaterials 30 bis 50 Minuten lang, um eine Temperatur zwischen 35 °C und 43 °C zu erreichen, dann
   - Erhitzen des Pflanzenmaterials 10 bis 20 Minuten lang, um eine Temperatur zwischen 43 °C und 48 °C zu erreichen, dann
   - Erhitzen des Pflanzenmaterials 45 bis 90 Minuten lang, um eine Temperatur zwischen 48 °C und 55 °C zu erreichen,
   - Halten des Pflanzenmaterials bei einer Temperatur zwischen 48 °C und 55 °C während 45 Minuten bis 80 Minuten.

4. Verfahren nach einem der Ansprüche 1 bis 3, wobei die Pflanzenzusammensetzung nach der Reifung unter der neutralen Atmosphäre pasteurisiert wird.

5. Verfahren nach einem der Ansprüche 1 bis 4, wobei die Pflanzenzusammensetzung nach der Reifung auf eine Temperatur zwischen 5 °C und 25 °C abgekühlt wird oder, wenn dies relevant ist, nach der Pasteurisierung.

6. Verfahren nach einem der Ansprüche 1 bis 5, wobei das Pflanzenmaterial aus ganzen Früchten, Fruchtstücken, ganzen Pflanzen, Pflanzenstücken oder Mischungen davon besteht.

7. Verfahren nach einem der Ansprüche 1 bis 6, wobei das Pflanzenmaterial aus einer einzelnen Gewächsspezies besteht.

8. Verfahren nach einem der Ansprüche 1 bis 7, wobei das Pflanzenmaterial in einem Beutel platziert wird und der Beutel vor der Reifung versiegelt wird.

9. Verfahren nach einem der Ansprüche 1 bis 8, wobei das Pflanzenmaterial nach der Reifung oder nach der Pasteurisierung konzentriert oder getrocknet wird.

10. Verfahren nach einem der Ansprüche 1 bis 9, wobei das Pflanzenmaterial vor der Reifung gefroren bereitgestellt wird.

**Revendications**

1. Procédé de fabrication d'une composition végétale comprenant les étapes consistant à fournir un matériau végétal ayant une taille de 10 à 50 mm, à ajouter jusqu'à 5 % en poids d'eau en fonction du poids du matériau végétal, et à mettre en oeuvre une maturation dudit matériau végétal qui comprend a) une étape de chauffage du matériau végétal à une température de 35 °C à 55 °C, suivie par b) une étape de maintien du matériau végétal à une température comprise de 35 °C à 55 °C pendant 60 à 480 minutes, pour obtenir ladite composition végétale, ledit matériau végétal n'étant pas homogénéisé avant la maturation,
   dans lequel au moins la maturation est mise en oeuvre sous vide ou sous une atmosphère neutre, ladite atmosphère neutre étant obtenue en utilisant un gaz inerte de qualité alimentaire dans un système fermé, et dans lequel après ladite maturation sous vide, ladite composition végétale est pasteurisée.

2. Procédé selon la revendication 1 dans lequel l'étape de chauffage est mise en oeuvre à une vitesse de 0,10 °C à 1,00 °C par minute.

3. Procédé selon la revendication 1 ou la revendication 2, dans lequel la maturation comprend les étapes consécutives suivantes :

- chauffage du matériau végétal pendant 30 à 50 minutes pour atteindre une température entre 35 °C et 43 °C, puis
- chauffage du matériau végétal pendant 10 à 20 minutes pour atteindre une température entre 43 °C et 48 °C, puis
- chauffage du matériau végétal pendant 45 à 90 minutes pour atteindre une température entre 48 °C et 55 °C,
- maintien du matériau végétal à une température comprise entre 48 °C et 55 °C, pendant 45 minutes à 80 minutes.

4. Procédé selon l'une quelconque des revendications 1 à 3, dans lequel ladite composition végétale est pasteurisée après ladite maturation sous l'atmosphère neutre.

5. Procédé selon l'une quelconque des revendications 1 à 4, dans lequel ladite composition végétale est refroidie jusqu'à une température comprise entre 5 °C et 25°C après ladite maturation ou, le cas échéant, après ladite pasteurisation.

6. Procédé selon l'une quelconque des revendications 1 à 5, dans lequel ledit matériau végétal est constitué de fruits entiers, morceaux de fruits, légumes entiers, morceaux de légumes, ou mélanges de ceux-ci.

7. Procédé selon l'une quelconque des revendications 1 à 6, dans lequel ledit matériau végétal est constitué d'une seule espèce de plante.

8. Procédé selon l'une quelconque des revendications 1 à 7, dans lequel ledit matériau végétal est placé dans un sachet, et le sachet est scellé, avant la maturation.

9. Procédé selon l'une quelconque de la revendication 1 à 8, dans lequel ledit matériau végétal est concentré ou séché après maturation ou après pasteurisation.

10. Procédé selon l'une quelconque des revendications 1 à 9, dans lequel ledit matériau végétal est fourni congelé avant la maturation.

FIG. 1

FIG. 2

FIG. 3

FIG. 4

FIG. 5

FIG. 6

Axis 1: 55%
Axis 2: 14%

FIG. 7

**EP 3 595 460 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0777975 A1
- US 20100055242 A1
- WO 2006056341 A1
- EP 0759469 A
- EP 0521240 A
- WO 2009066022 A1